# EUROPÄISCHE PATENTSCHRIFT

(11) **EP 1 199 351 B1**
(45) Veröffentlichungstag und Bekanntmachung des Hinweises auf die Patenterteilung: **13.07.2005**
(21) Anmeldenummer: 01124632.9
(22) Anmeldetag: 16.10.2001
(51) Int. Cl.: C12G 3/07

(54) **Vorrichtung und Verfahren zur Aromatisierung von flüssigem Lagergut**
Apparatus and process for flavouring liquid products
Appareil et procédé d'aromatisation de produits liquides

(30) Priorität: 21.10.2000 DE 10052356
(43) Veröffentlichungstag der Anmeldung: 24.04.2002
(73) Patentinhaber: Ritter, Stephan, Dr., 79106 Freiburg (DE)
(72) Erfinder: Ritter, Stephan, Dr., 79106 Freiburg (DE)
(74) Vertreter: Huwer, Andreas

(56) Entgegenhaltungen:
- WO-A-97/04072
- DE-C- 56 305
- FR-A- 2 736 923
- US-A- 2 064 330
- US-A- 4 558 639
- US-A- 5 647 268

## Beschreibung

Die Erfindung betrifft eine Vorrichtung zur Aromatisierung von flüssigem Lagergut. Des weiteren betrifft die Erfindung ein Verfahren zur Aromatisierung von flüssigem Lagergut mittels dieser Vorrichtung.

Flüssiges Lagergut wie Weine, Spirituosen oder dergleichen alkoholhaltige Getränke, werden heute in großen, senkrecht stehenden Edelstahltanks oder in Holzfässern mit einem Volumen von etwa 200 l bis 10.000 l gelagert bzw. ausgebaut, wobei als Fassholz vorzugsweise Eichenholz aus bestimmten Gebieten, bspw. aus Allier in Frankreich, verwendet wird. Die Art des verwendeten Holzes sowie das Verhältnis Oberfläche/Volumen des Fasses spielen insbesondere für den Charakter und die Qualität der Weine und der Spirituosen eine bedeutende Rolle. Hinsichtlich der Weine eignen sich für den Ausbau in Holzfässern bevorzugt Rotweine, während Weißweine überwiegend in Stahltanks ausgebaut werden. In zunehmendem Maße werden auch Spirituosen, wie Tequila oder andere höherprozentige Getränke, in Holzfässern gelagert, um eine spezielle Geschmacksnote zu erreichen. Die Geschmacksnote wird im wesentlichen bestimmt durch die Extraktion von Phenolen, Tanninen und dergleichen aromatischen Verbindungen sowie von Terpenen.
Weiterhin wurde in klinischen Studien gefunden, dass die insbesondere in Rotweinen vorhandenen Phenolderivate, bspw. Tannine, einen positiven Effekt auf ein mögliches koronares Ereignis, wie Herzinfarkt, haben könnten. Aufgrund der möglichen kardioprotektiven Wirkung dieser Substanzen ist es wünschenswert, Weine oder sonstige alkoholhaltige Getränke damit anzureichern.

Bei der herkömmlichen Lagerung der Weine, Spirituosen oder dergleichen alkoholhaltige Getränke in Holzfässern, ist es jedoch von Nachteil, dass das Fassholz nach einer einmaligen Lagerung größtenteils ausgelaugt ist und für einen weiteren Wein- oder Spirituosenausbau nicht mehr verwendet werden kann.

In der FR-PS-11 64 437 ist ein Verfahren zur Aromatisierung von alkoholischen Flüssigkeiten beschrieben, wobei zur alkoholischen Flüssigkeit Eichenholzextrakte zugesetzt werden, die bei der Mazerierung von Eichenspänen in einem alkoholreichen wässrigalkoholischen Medium erhalten werden. Nachteilig ist, dass die mit Eichenholzextrakten versetzten Flüssigkeiten nicht dieselben relativen Mengen an Holzinhaltsstoffen aufweisen, wie die in herkömmlichen Eichenfässern gelagerten alkoholischen Flüssigkeiten.

Die Dokumente FR-A-2 736 923 und US-A-4 558 639 beschreiben Vorrichtungen und Verfahren bei welchen zur Aromatisierung eine Mehrzahl von Holzplatten in das flüssige Lagergut eingebracht wird. gemäß DE-A-56305 wird in eine Vorrichtung zur Aromatisierung sauerstoffhaltiges Gas eingeleitet.

Die Aufgabe der vorliegenden Erfindung besteht darin, eine Vomchtung und ein Verfahren zur Aromatisierung von flüssigem Lagergut bereitzustellen, die sowohl eine einfache Handhabung als auch eine kontrollierte Extraktion von Holzinhaltsstoffen gewährleisten. Diese Aufgabe wird mit einer Vorrichtung nach den Merkmalen des Patentanspruchs 1 und mit einem Verfahren nach den Merkmalen des Patentanspruchs 9 gelöst. Vorteilhafte Weiterbildungen sind in den Unteransprüchen angegeben.

Ein Kerngedanke der vorliegenden Erfindung besteht darin, dass eine Befestigungseinrichtung und eine Mehrzahl von Holz- oder holzartigen Platten vorgesehen sind, wobei die Holzplatten insbesondere schwenkbar an der Befestigungseinrichtung angeordnet sind, derart, dass sie sich in Abhängigkeit ihrer Dichte im Lagergut ausrichten. Hierdurch ist es möglich, auf natürliche Art und Weise ohne den Einsatz von künstlichen Extrakten oder zusätzlichen Chemikalien eine definierte Menge an Holzinhaltsstoffen in eine beliebige Flüssigkeit einzubringen. Die definierte Menge an Holzinhaltsstoffen ist abhängig von der Extraktionsdauer und dem Oberflächen/Volumen Verhältnis der Holzplatten. Anstelle der Holzplatten können auch holzartige Platten, bspw. (Holz-) Faserplatten, verwendet werden. Mittels der Befestigungseinrichtung können mehrere Holzplatten in das Lagergut eingebracht werden, die sich in Abhängigkeit ihrer Dichte selbsttätig im Lagergut ausrichten und das Tankvolumen optimal ausfüllen, so dass eine homogene Extraktion gewährleistet ist. Bei Erreichen der vorgegebenen Zielwerte kann die Extraktion sofort durch die Entnahme der Vorrichtung aus dem Lagergut gestoppt werden, wodurch eine gute Reproduzierbarkeit der Ergebnisse gewährleistet wird.

In einer vorteilhaften Ausgestaltung weist die Befestigungseinrichtung ein Führungselement und zur Befestigung der Holzplatten mindestens ein an das Führungselement anbringbares Tragelement auf. Durch diese konstruktive Maßnahme können beliebig viele Holzplatten an der Befestigungseinrichtung angebracht werden. Darüber hinaus wird durch das Vorsehen von Tragelementen die Stabilität der Befestigungseinrichtung bzw. der erfindungsgemäßen Vorrichtung gewährleistet. Die Tragelemente sind vorzugsweise entlang einer etwa vertikalen Längsachse des Führungselements insbesondere mittels Abstandselementen voneinander beabstandet angeordnet. Die Abstandselemente verhindern, dass die Holzplatten im Lagergut zu dicht aneinander liegen. Eine gleichmäßige Verteilung der Holzplatten entlang der Längsachse des Führungselements und damit längs der Tanklängsachse wird gewährleistet, was eine gleichmäßige Extraktion der Holzinhaltsstoffe in das Lagergut bewirkt.

Vorteilhafterweise sind die Holzplatten in ihrer Ausgangsstellung im wesentlichen parallel zur Längsachse des Führungselements angeordnet und derart schwenkbar an den Tragelementen befestigt, dass sie beim Einbringen in das Lagergut einen Winkel zur Längsachse bilden. Durch die schwenkbare Befestigung der Holzplatten richten sich diese je nach ihrer Dichte im Lagergut stern- bzw. strahlenförmig auf, ohne sich gegenseitig zu behindern oder ineinander zu verkeilen. Beim Entfernen der Vorrichtung aus dem Lagergut klappen die Holzplatten ebenso ungehindert in die Ausgangsposition zurück.

Vorzugsweise umfassen die Tragelemente im wesentlichen ebene, insbesondere scheibenförmige Platten oder Stäbe, Stangen, Drähte oder dergleichen Gestelleinrichtungen oder eine Kombination davon. Werden Stäbe oder Stangen verwendet, so sind diese zweckmäßigerweise über Kreuz angeordnet und weisen an ihren radial äußeren Enden einen umlaufenden Draht oder ein Seil auf, der bzw. das einen Umfangsrand bildet und zur Befestigung der Holzplatten dient. Alternativ können die Holzplatten auch direkt an den äußeren Enden der Stäbe oder Stangen schwenkbar angeordnet sein.

Besonders bevorzugt ist die Vorrichtung derart ausgebildet bzw. bemessen, dass sie über die Tanköffnung in einen Tank einbringbar ist, wobei der Durchmesser der Tragelemente zweckmäßigerweise kleiner ist als der Durchmesser der Tanköffnung. Der Durchmesser der Tragelemente variiert entlang der Längsachse des Führungselements derart, dass die oberen, der Tankoffnung zugeordneten Tragelemente einen größeren Durchmesser aufweisen als die unteren, dem Tankboden zugeordneten Tragelemente. Durch diese konstruktive Maßnahme wird der Raumbedarf der Vorrichtung erheblich minimiert, so dass diese problemlos über die Tanköffnung in das im Tank befindliche Lagergut eingeführt und aus dem Lagergut bzw. aus dem Tank wieder entfernt werden kann.

Vorteilhafterweise sind die Holzplatten im wesentlichen rechteckförmig ausgebildet, wobei die Holzplatten eine Dicke von etwa 1 bis 15 mm, vorzugsweise von etwa 3 bis 7 mm, aufweisen. Holzplatten in diesem Dickenbereich eignen sich besonders gut zur Extraktion von Holzinhaltsstoffen. Die Länge und die Breite der Holzplatten können je nach Durchmesser der Tanköffnung und Tankvolumen beliebig variieren. Die Holzplatten sind bevorzugt aus Eichenholz oder aus einem Holz oder holzartigen Material mit Eichenholz entsprechenden Holzinhaltsstoffen hergestellt. Hierdurch lassen sich die selben Ergebnisse erzielen, wie bei der herkömmlichen Lagerung von Weinen oder Spirituosen in Eichenholzfässern. Nach Beendigung der Extraktion kann das Holz oder holzartige Material als Brennmaterial umweltverträglich entsorgt werden.

Vorteilhafterweise sind die Tragelemente und die Abstandselemente aus Holz, Kunststoff oder Metall, vorzugsweise Edelstahl hergestellt. Diese Materialen sind problemlos autoklavierbar und somit für den nächsten Einsatz wiederverwendbar.

Die Erfindung befasst sich ferner mit einem Verfahren zur Aromatisierung von flüssigem Lagergut, wie Weine oder dergleichen alkoholhaltige Getränke. Das erfindungsgemaße Verfahren zeichnet sich dadurch aus, dass in einem ersten Verfahrensschritt die Vorrichtung in das Lagergut eingebracht wird. In einem zweiten Verfahrensschritt wird die Temperatur des Lagerguts in einem Bereich von etwa 4 bis 100° C eingestellt und in einem dritten Verfahrensschritt wird ein sauerstoffhaltiges Gas oder Gasgemisch in das Lagergut eingeleitet. Die Extraktion von Holzinhaltsstoffen ist bei diesem relativ niedngen Temperaturbereich wesentlich selektiver als eine Extraktion bei hoheren Temperaturen. Dadurch wird gewährleistet, dass sowohl die Art als auch die Verhältnisse der einzelnen Inhaltsstoffe denjenigen sehr ähnlich sind, die bei der herkömmlichen Lagerung des Lagerguts aus dem Fassholz herausgelöst werden. Durch das Einleiten des sauerstoffhaltigen Gases oder Gasgemischs in das Lagergut wird die Alterung (Feinoxidation) insbesondere des Weins beschleunigt.

Vorzugsweise wird das sauerstoffhaltige Gas oder Gasgemisch im Bereich des Tankbodens in das Lagergut eingeleitet. Durch die aufsteigenden Gasbläschen entsteht zusätzlich eine Konvektion im Innern des Tanks, so dass eine Durchmischung und Homogenisierung der Lösung begünstigt wird. Zusätzlich können zwecks besserer Durchmischung Pumpen verwendet werden. Die Gasbläschen weisen vorteilhafterweise eine im wesentlichen einheitliche Oberfläche auf, so dass eine optimale Oxidation insbesondere der Weine erreicht wird.

Die Erfindung wird nachstehend, auch hinsichtlich weiterer Merkmale und Vorteile, anhand der Beschreibung von Ausführungsbeispielen und unter Bezugnahme auf die beiliegenden Zeichnungen näher erläutert. Hierbei zeigen:
- Fig. 1: eine Schnittansicht einer ersten Ausführungsform einer erfindungsgemäßen Vorrichtung in einem Tank,
- Fig. 2: eine Schnittansicht der Vorrichtung mit Holzplatten in ihrer Ausgangsstellung,
- Fig. 3, 3a: eine vergrößerte Darstellung einer Holzplatte mit Befestigungsmitteln in Schnittansicht,
- Fig. 4: eine Draufsicht auf die Vorrichtung von Fig. 1, und
- Fig. 5: eine weitere Ausführungsform der Vorrichtung in Draufsicht.

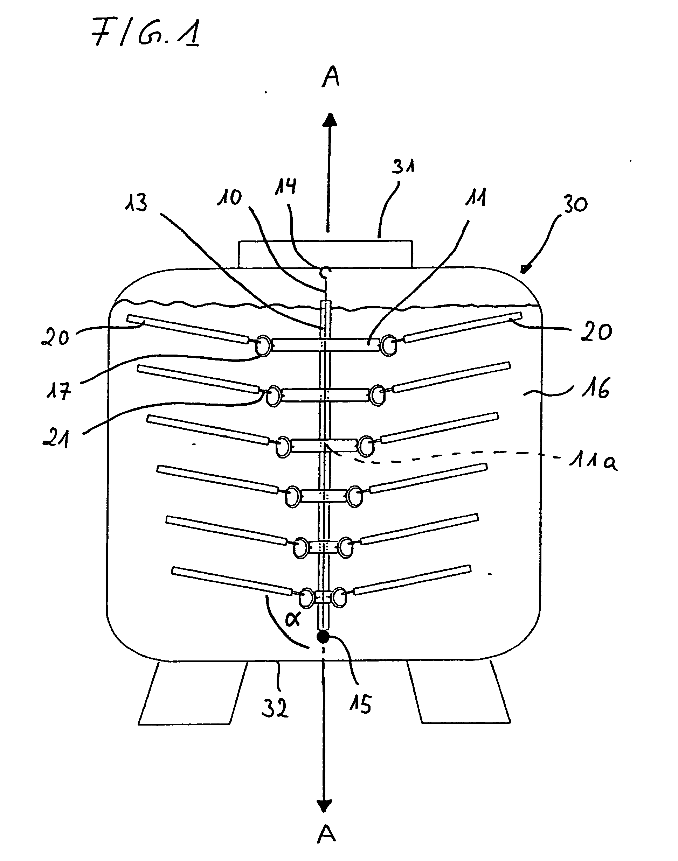

In Fig. 1 ist eine erste Ausführungsform einer erfindungsgemäßen Vorrichtung in einem Tank 30 in Schnittansicht gezeigt. Der Tank 30 ist mit einem flüssigem Lagergut 16, beispielsweise mit Wein gefüllt. Anstelle von Wein können auch andere alkoholhaltige Getränke, wie Spirituosen, im Tank 30 vorgesehen sein.
Die Vorrichtung weist ein etwa vertikal im Tank 30 angeordnetes Führungselement 10 auf, das beispielsweise als Seil oder als Stange ausgebildet ist, wobei das Seil oder die Stange eine Längsachse A des Führungselements 10 definiert, die zugleich die Längsachse der Vorrichtung bildet. Das Führungselement 10 umfasst an seinem ersten, der Tanköffnung 31 zugeordneten Ende einen Haken 14 zur Befestigung im Tank 30 und weist an seinem zweiten, dem Tankboden 32 zugeordneten Ende ein Gewicht 15 auf, das zur stabilen Positionierung der Vorrichtung im Tank 30 dient. Das Führungselement 10 und das Gewicht 15 sind vorzugsweise aus einem nicht korrodierbaren Metall, beispielsweise aus Edelstahl, hergestellt.
Des weiteren umfasst die Vorrichtung Tragelemente 11, die am Führungselement 10 längs der vertikalen Längsachse A angeordnet bzw. aufgereiht sind. Zu diesem Zweck besitzen die Tragelemente 11 eine im wesentlichen zentrale Bohrung 11a. Die Tragelemente 11 sind in dem konkreten Ausführungsbeispiel nach den Fig. 1 bis 4 als scheibenförmige Platten 11 ausgebildet und mittels Abstandselementen 13 voneinander beabstandet am Führungselement 10 angeordnet. Die Abstandselemente 13 sind etwa zylinderförmig ausgebildet und besitzen einen Durchmesser, der zweckmäßigerweise größer ist als der Durchmesser der Bohrung 11a der Tragelemente 11. Am Umfangsrand der Tragelemente 11 sind mehrere Holzplatten 20 schwenkbar befestigt, die zur Aromatisierung des Lagerguts 16 dienen. Die Holzplatten 20 sind im wesentlichen rechteckförmig gestaltet, wobei die Dicke der Holzplatten 20 etwa 1 bis 15 mm, vorzugsweise etwa 3 bis 7 mm beträgt. Die Längen- und Breitenabmessungen der Holzplatten 20 können beliebig variiert und dem jeweiligen Tankvolumen angepasst werden. Bevorzugte Längenund Breitenabmessungen der Holzplatten 20 belaufen sich jeweils auf etwa 0,5 bis 1 m und 0,2 bis 0,5 m, um eine für die Extraktion möglichst große Oberfläche zu erreichen. Die Holzplatten 20 sind bevorzugt aus Eichenholz hergestellt, dessen Inhaltsstoffe sich in besonderem Maße zur Aromatisierung von Weinen und Spirituosen eigenen. Anstelle von Holzplatten aus Eichenholz können auch Platten aus einer anderen Holzart oder aus holzartigem Material verwendet werden, wobei das Holz bzw. das holzartige Material vorzugsweise Holzinhaltsstoffe besitzt, die den Holzinhaltsstoffen von Eichenholz entsprechen.

Die Vorrichtung ist nach dem Baukastensystem zusammensetzbar, wobei das Führungselement 10, die Tragelemente 11, die Holzplatten 20 sowie die Abstandselemente 13 jeweils einen Teil des Baukastensystems bilden. Für den Aufbau der Vorrichtung werden die Tragelemente 11 und die Abstandselemente 13 abwechselnd am Führungselement 10 angeordnet bzw. aufeinandergesetzt. Das Gewicht 15 am zweiten Ende des Führungselements 10 dient zugleich als Endstück für das endseitige Abstandselement 13 oder Tragelement 11. Aufgrund des Baukastenprinzips wird die Montage und die Handhabung erheblich vereinfacht. Die Vorrichtung kann je nach vorgegebenen Tankabmessungen individuell zusammengesetzt werden, so dass das Tankvolumen optimal ausgefüllt wird. In entsprechender Weise kann die Vorrichtung nach Beendigung der Extraktion in ihre Einzelteile zerlegt werden, so dass diese gründlich gereinigt, insbesondere autoklaviert werden können und somit wieder von neuem einsetzbar sind.

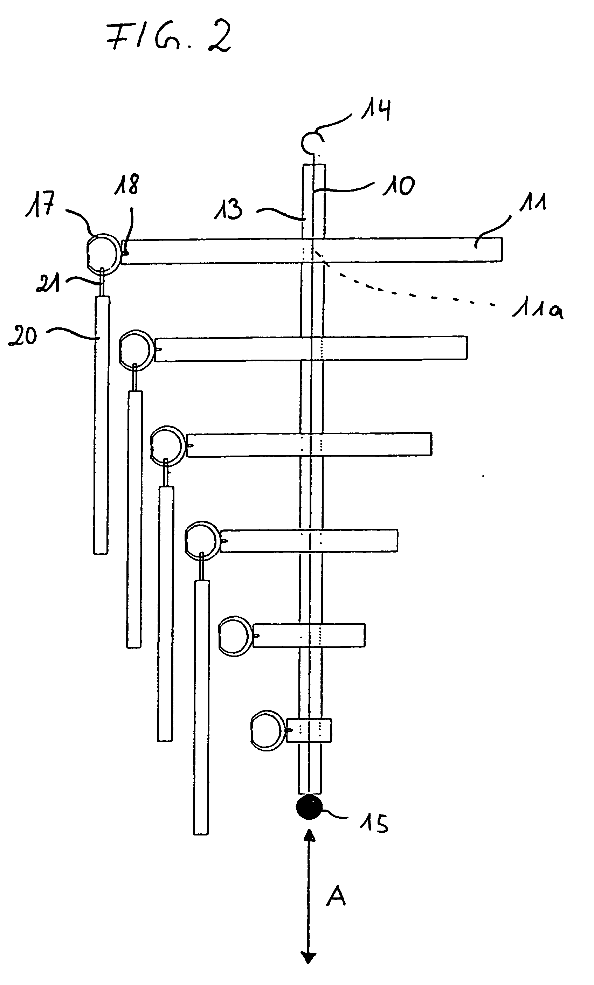

Die einzelnen Tragelemente 11 variieren jeweils hinsichtlich ihres Durchmessers und werden derart am Führungselement 10 angeordnet, dass sich die Tragelemente 11 mit einem größeren Durchmesser im oberen Bereich des Tanks 30 befinden und die Tragelemente 11 mit einem kleineren Durchmesser im unteren Bereich des Tanks 30 vorgesehen sind. Bevorzugt sind die Tragelemente 11 am Führungselement 10 längs der Längsachse A so angeordnet, dass der Durchmesser der Tragelemente 11 ausgehend von der Tanköffnung 31 in Richtung zum Tankboden 32 kontinuierlich abnimmt, so dass die Holzplatten 20 in ihrer Ausgangsstellung gemäß Fig. 2 im wesentlichen parallel zur Längsachse A angeordnet sind. Zweckmäßigerweise ist der Durchmesser der Tragelemente 11 kleiner als der Durchmesser der Tanköffnung 31, so dass die Vorrichtung über die Tankoffnung 31 in den Tank 30 eingeführt werden kann. Dabei sind ggf. von den Tragelementen 11 radial vorstehende Befestigungsmittel 17, die zur Befestigung der Holzplatten 20 dienen, sowie die Holzplatten 20 selbst hinsichtlich ihrer Abmessungen entsprechend mit zu berücksichtigen, so dass die vollständig zusammengesetzte Vorrichtung über die Tanköffnung 31 in den Tank 30 eingebracht werden kann.

Beim Einbringen der Vorrichtung in das Lagergut 16 richten sich die Holzplatten 20 in Abhängigkeit ihrer Dichte selbsttätig aus und bilden einen Winkel α zur Längsachse A des Führungselements 10. Der Winkel α beträgt je nach Holzart etwa 90 bis 180°, vorzugsweise etwa 90 bis 150° . Während der Verweildauer im Tank 30 nehmen die Holzplatten 20 große Mengen an Flüssigkeit auf und stellen sich dann etwa senkrecht zur Längsachse A (α = 90°). Die gleichmäßige Verteilung der extrahierten Holzinhaltsstoffe im Lagergut 16 erfolgt primär durch Diffusion, wobei der Konzentrationsausgleich im Lagergut 16 durch eine größere Anzahl von Holzplatten 20 beschleunigt werden kann. Zusätzlich oder alternativ kann die Vorrichtung um die Längsachse A gedreht werden, um eine gute Durchmischung und Homogenisierung des Lagerguts 16 zu erreichen. Dies kann entweder von Hand oder mittels einer Antriebseinrichtung (nicht gezeigt) bewerkstelligt werden, die beispielsweise am Führungselement 10 wirksam ist. Denkbar wäre auch das Vorsehen von Pumpen oder dergleichen Mischeinrichtungen im Tank 30, die das Lagergut 16 homogenisieren.

Die Kontrolle der Extraktion der Holzinhaltsstoffe erfolgt durch Probennahme an geeigneten Stellen des Tanks 30. Durch eine chemisch-physikalische Untersuchung vorzugsweise mit Hilfe eines Gaschromatographen wird der Wirkstoffgehalt des Lagerguts 16 bestimmt und mit Standardwerten eines im herkömmlichen Holzfass gelagerten Lagerguts verglichen. Der Wirkstoffgehalt des Lagerguts 16 kann sowohl durch die Lagerdauer (Extraktionsdauer) als auch durch die in den Tank 30 eingebrachte Menge an Holzplatten 20 beeinflusst werden. Durch die exakte Bestimmung der Parameter Holzart, Oberfläche der Holzplatten 20, Temperatur, Zeit, Alkoholgehalt des Lagerguts usw. sowie die ständige Kontrolle des Wirkstoffgehalts mit den oben erwähnten Meßmethoden in Abhängigkeit von der Lagerdauer kann eine gute Reproduzierbarkeit der Ergebnisse der Aromatisierung des Lagerguts 16 gewährleistet werden.

Zur Befestigung der Vorrichtung im Tank 30 dient der oben genannte Haken 14 des Führungselements 10, der in eine Öse, einen Bügel oder dergleichen korrespondierendes Befestigungsmittel (nicht gezeigt) eingreift, das im Innern des Tanks 30, vorzugsweise im Bereich der Tanköffnung 31, vorgesehen ist. Die Vorrichtung ist somit vollständig im Innern des Tanks 30 aufgenommen, so dass das ordnungsgemäße Verschließen des Tanks 30 gewährleistet ist. Die Entnahme der Vorrichtung aus dem Tank 30 kann je nach Größe und Gewicht der Vorrichtung ggf. mit einem Hilfsmittel, wie einem Flaschenzug oder einer Seilwinde, erfolgen, wobei der Haken 14 des Führungselements 10 an dem jeweiligen Hilfsmittel eingehängt wird. Die Vorrichtung kann bereits während der Entnahme aus dem Tank 30 teilweise zerlegt werden, beispielsweise durch Entfernen der Holzplatten 20, solange das Gewicht der Holzplatten 20 noch durch den Auftrieb im Lagergut 16 teilweise kompensiert wird.

Nach der Entnahme der Vorrichtung aus dem Tank 30 wird diese in ihre einzelnen Bauteile zerlegt, wobei das Führungselement 10, die Abstandselemente 13 sowie die Tragelemente 11 für den nächsten Einsatz gereinigt und desinfiziert, insbesondere autoklaviert werden. Zu diesem Zweck sind das Führungselement 10, die Abstandselemente 13 sowie die Tragelemente 11 vorwiegend aus autoklavierbaren, nicht korrodierbaren Materialien, wie Edelstahl, Holz oder Kunststoff hergestellt. In entsprechender Weise können die Holzplatten 20 zur Wiederverwendung autoklaviert werden, sofern sie noch ausreichend Holzinhaltsstoffe für einen weiteren Extraktionsvorgang aufweisen. Sind die Holzplatten 20 ausgelaugt, so können sie auf umweltverträgliche Weise als Brennmaterial entsorgt werden.

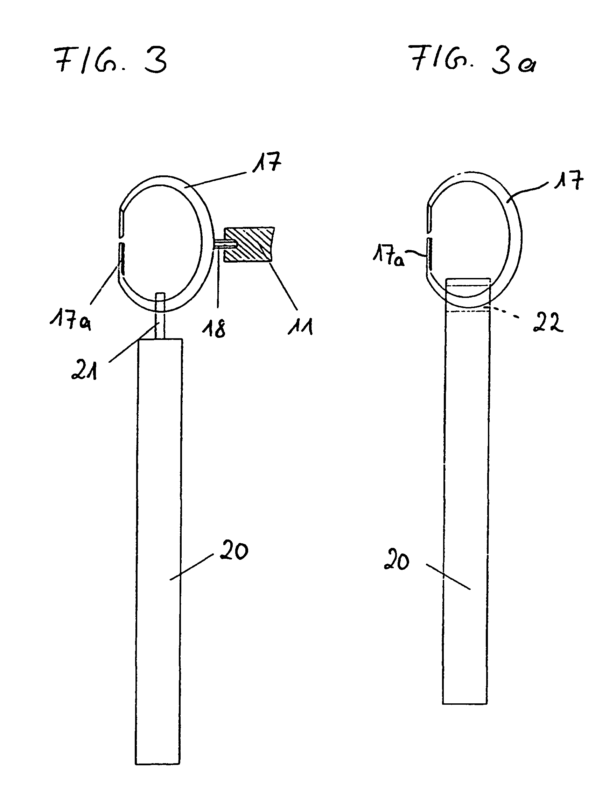

Die Holzplatten 20 sind über Befestigungsmittel 17, 21 am Umfangsrand der Tragelemente 11 schwenkbar befestigt, wie in Fig. 2 und 3 dargestellt ist. Die Befestigungsmittel 17 und 21 umfassen tragelementseitig fixierte Karabinerhaken 17 und holzplattenseitig angeordnete Ösen 21, die in die Karabinerhaken 17 eingeklinkt werden. Die Karabinerhaken 17 weisen einen Schnappverschluss 17a auf und sind mittels eines Stifts 18 am Tragelement 11 fest verankert. Die Holzplatten 20 lassen sich durch diese konstruktive Maßnahme auf einfache Weise an den Tragelementen 11 schwenkbar befestigen und sind während der Schwenkbewegung sicher mit den Tragelementen 11 verbunden. Um eine sichere, schwenkbare Verbindung zu ermöglichen, sind auch andere Verbindungs- und Befestigungsmittel denkbar, wie Kugelgelenke oder dergleichen Gelenkverbindungen.
Anstelle der Ösen 21 können an der Holzplatte 20 im stirnseitigen Bereich eine oder mehrere Bohrungen 22 vorgesehen sein, durch welche die Karabinerhaken 17 hindurchgreifen, wie in Fig. 3a gezeigt ist.

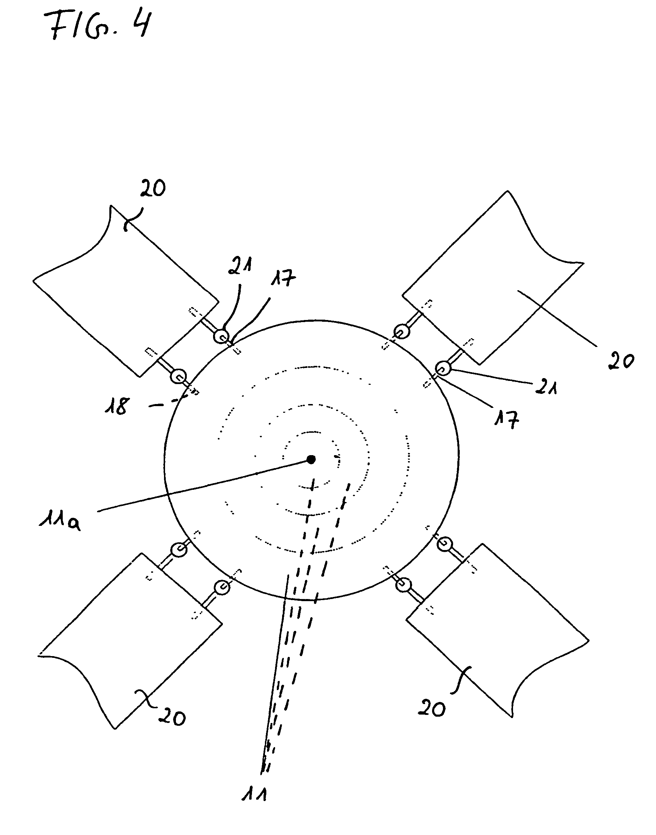

In Fig. 4 ist eine Draufsicht auf die Vorrichtung von Fig. 1 gezeigt. Deutlich zu sehen sind die übereinander angeordneten scheibenförmigen Tragelemente 11 mit jeweils unterschiedlichen Durchmessern (gestrichelt dargestellt). Der Übersichtlichkeit halber sind nur vier Holzplatten 20 gezeigt, die sich in aufgerichteter Position befinden und längs des Umfangsrands des oberen Tragelements 11 angeordnet sind. Die Anzahl der Holzplatten 20 pro Tragelement 11 ist abhängig von sowohl der Breite der Holzplatten 20 als auch von dem Durchmesser der Tragelemente 11. Zweckmäßigerweise sind die Holzplatten 20 soweit voneinander beabstandet, dass sie sich bei der Schwenkbewegung nicht ineinander verkeilen. Um eine Verkippung der Holzplatten 20 quer zu den Tragelementen 11 zu vermeiden, sind pro Holzplatte 20 jeweils paarweise angeordnete Befestigungsmittel 17 und 21 vorgesehen, die etwa randseitig an den Holzplatten 20 wirksam sind. Die so befestigten Holzplatten 20 schwenken im Lagergut 16 stern- bzw. strahlenförmig auf, ohne sich gegenseitig zu behindern.

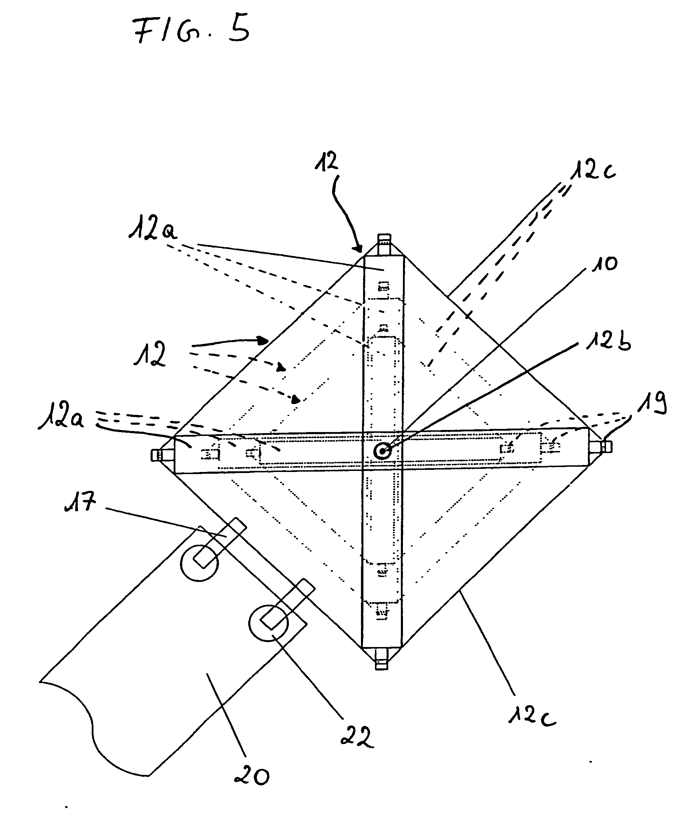

In Fig. 5 ist eine weitere Ausführungsform der Vorrichtung in Draufsicht gezeigt. Die Tragelemente 12 sind im Unterschied zur vorherigen Ausführungsform aus Stäben 12a oder Stangen gebildet, die über Kreuz angeordnet sind und über eine etwa zentrale Bohrung 12b am Führungselement 10 befestigt sind. An den radial äußeren Enden der Stäbe 12a ist jeweils eine Durchführung 19 für einen umlaufenden Draht 12c oder dergleichen Spannelement vorgesehen, der einen Umfangsrand definiert. Die Holzplatten 20 sind mittels Karabinerhaken 17 an dem Draht 12c schwenkbar befestigt. Im konkreten Ausführungsbeispiel gemäß Fig. 5 sind die Tragelemente 12 jeweils aus zwei über Kreuz angeordneten Stäben 12a gebildet, derart, dass der umlaufende Draht 12c ein Viereck beschreibt. Je nach Tankvolumen ist auch eine Anordnung von mehreren über Kreuz fixierten Stäben 12a möglich, so dass der umlaufende Draht 12c ein 6-, 8- oder Vieleck bildet. Die Stäbe 12a sowie der umlaufende Draht 12c sind bei dieser Ausführungsform bevorzugt aus Edelstahl oder Kunststoff hergestellt.
Der Durchmesser der Tragelemente 12 variiert längs der Längsachse A derart, dass der Durchmesser in Richtung zum Tankboden 32 hin stetig abnimmt.

Das Verfahren zur Aromatisierung von flüssigem Lagergut 16, insbesondere mit an der Vorrichtung gemäß den Fig. 1 bis 5 befestigten Holzplatten 20 wird nachfolgend beschrieben:

Die Vorrichtung wird mitsamt den Holzplatten 20 über die Tanköffnung 31 in das im Tank 30 befindliche Lagergut 16 eingebracht und im Innern des Tanks 30 befestigt. Das Lagergut 16 umfasst bevorzugt Wein, insbesondere Rotwein. Die Temperatur des Lagerguts 16 wird in einem Bereich von etwa 4 bis 100° C eingestellt und ein sauerstoffhaltiges Gas oder Gasgemisch wird vorzugsweise im Bereich des Tankbodens 32 in das Lagergut 16 eingeleitet, beispielsweise mit Hilfe einer Membranpumpe. Durch die Einleitung des sauerstoffhaltigen Gases oder Gasgemischs wird eine kontrollierte Feinoxidation (Alterung) insbesondere von Weinen gewährleistet. Darüber hinaus entsteht durch die aufsteigenden Gasbläschen zusätzlich eine Konvektion im Tank 30, die eine Homogenisierung des Lagerguts 16 begünstigt. Mittels eines Bimssteins oder eines anderen geeigneten Hilfsmittels erhalten die Gasbläschen eine einheitliche Oberfläche, um eine optimale Oxidation des Lagerguts 16 zu erreichen. Während der Extraktionsdauer wird der Wirkstoffgehalt des Lagerguts 16 anhand von Probennahmen bestimmt. Sind die vorgegebenen Zielwerte erreicht, wird die Vorrichtung wieder aus dem Tank 30 über die Tanköffnung 31 entnommen.

Insgesamt zeichnet sich die oben beschriebene Vorrichtung und das Verfahren zur Aromatisierung von flüssigem Lagergut 16 durch eine einfache Handhabung und eine große Wirtschaftlichkeit aus. Auf eine natürliche Art und Weise, ohne den Einsatz von künstlichen Extrakten oder Chemikalien, wird eine definierte Menge an Holzinhaltsstoffen in das Lagergut 16 eingebracht, so dass das Lagergut 16 Eigenschaften besitzt, die gleich oder ähnlich den durch eine herkömmliche Reifung in (Eichen-) Holzfässern erzielten Eigenschaften sind. Bei Erreichen der vorgegebenen Zielwerte kann die Extraktion durch die Entnahme der Vorrichtung aus dem Tank sofort gestoppt werden. Damit zeichnen sich die obige Vorrichtung und das Verfahren durch eine sehr gute Reproduzierbarkeit der erzielten Ergebnisse aus. Als Tanks können Stahl- oder Kunststofftanks mit einem beliebigen Tankvolumen verwendet werden, da die Vorrichtung aufgrund des Baukastenprinzips jedem Tankvolumen problemlos angepasst werden kann. Weitere Vorteile sind die leichte Montierbarkeit, die universelle Einsetzbarkeit, der geringe Raumbedarf bei der Lagerung sowie die Autoklavierbarkeit aller verwendeten Bauteile der Vorrichtung. Sämtliche Bauteile sind somit wiederverwendbar bzw. recyclingfähig oder können umweltverträglich entsorgt werden.

### Bezugszeichenliste

- 10: Führungselement
- 11, 12: Tragelement
- 11a, 12b: zentrale Bohrung (Tragelement)
- 12a: Stäbe
- 12c: Draht
- 13: Abstandselement
- 14: Haken
- 15: Gewicht
- 16: Lagergut
- 17: Karabinerhaken
- 17a: Schnappverschluss
- 18: Stift
- 19: Durchführung
- 20: Holzplatte
- 21: Ösen
- 22: Bohrungen (Holzplatte)
- 30: Tank
- 31: Tanköffnung
- 32: Tankboden

- A: Längsachse
- α: Winkel

## Patentansprüche

1. Vorrichtung zur Aromatisierung von flüssigem Lagergut (16), wie Weine, Spirituosen oder dergleichen alkoholhaltigen Getränke, umfassend eine Befestigungseinrichtung (10, 11, 12), an der eine Mehrzahl von Holzplatten (20) oder holzartigen Platten angeordnet sind, **dadurch gekennzeichnet, dass** die Befestigungseinrichtung (10, 11, 12) ein Führungselement (10) mit einer etwa vertikalen Längsachse (A) aufweist, wobei die Holzplatten (20) in ihrer Ausgangsstellung im wesentlichen parallel zur Längsachse (A) derart schwenkbar angeordnet sind, dass sie sich beim Einbringen in das Lagergut (16) selbsttätig in Abhängigkeit von ihrer Dichte ausrichten und einen Winkel (α) zur Längsachse (A) bilden.

2. Vorrichtung nach Anspruch 1, **dadurch gekennzeichnet, dass** die Befestigungseinrichtung (10, 11, 12) zur Befestigung der Holzplatten (20) mindestens ein an das Führungselement (10) anbringbares Tragelement (11, 12) aufweist, wobei die Tragelemente (11, 12) entlang des Führungselements (10) mittels Abstandselementen (13) voneinander beabstandet angeordnet sind.

3. Vorrichtung nach Anspruch 1 oder 2, **dadurch gekennzeichnet, dass** die Tragelemente (11, 12) als im wesentlichen ebene, insbesondere scheibenförmige Platten (11) oder Stäbe (12a), Stangen, Drähte (12c) oder dergleichen Gestelleinrichtungen oder eine Kombination davon umfassen.

4. Vorrichtung nach einem der Ansprüche 1 bis 3, **dadurch gekennzeichnet, dass** sie derart ausgebildet bzw. bemessen ist, dass sie über eine Tanköffnung (31) in einen Tank (30) einbringbar ist.

5. Vorrichtung nach Anspruch 4, **dadurch gekennzeichnet, dass** der Durchmesser der Tragelemente (11, 12) kleiner ist als der Durchmesser der Tanköffnung (31), und dass der Durchmesser der Tragelemente (11, 12) entlang der Längsachse (A) des Führungselements (10) derart variiert, dass die oberen, der Tanköffnung (31) zugeordneten Tragelemente (11, 12) einen größeren Durchmesser aufweisen als die unteren, einem Tankboden (32) zugeordneten Tragelemente (11, 12).

6. Vorrichtung nach Anspruch 4 oder 5, **dadurch gekennzeichnet, dass** das Führungselement (10) an seinem ersten, der Tanköffnung (31) zugeordneten Ende Befestigungsmittel (14) zur Befestigung am Tank (30) umfasst und an seinem zweiten, dem Tankboden (32) zugeordneten Ende ein Gewicht (15) zur stabilen Positionierung aufweist.

7. Vorrichtung nach einem der Ansprüche 1 bis 6, **dadurch gekennzeichnet, dass** die Holzplatten (20) im wesentlichen rechteckförmig ausgebildet sind, wobei die Holzplatten (20) eine Dicke von etwa 1 bis 15 mm, vorzugsweise von etwa 3 bis 7 mm, aufweisen, und dass die Holzplatten (20) aus Eichenholz oder aus einem Holz oder holzartigem Material mit Eichenholz entsprechenden Holzinhaltsstoffen hergestellt sind.

8. Vorrichtung nach einem der Ansprüche 1 bis 7, **dadurch gekennzeichnet, dass** die Tragelemente (11, 12) und die Abstandselemente aus Holz, Kunststoff oder Metall, vorzugsweise Edelstahl, hergestellt sind.

9. Verfahren zur Aromatisierung von flüssigem Lagergut (16), wie Weine oder dergleichen alkoholhaltigen Getränke mittels der Vorrichtung nach einem der Ansprüche 1 bis 8, **gekennzeichnet durch** folgende Schritte:
- Einbringen der Vorrichtung in das flüssige Lagergut (16),
- Einstellen der Temperatur des Lagerguts (16) in einem Bereich von etwa 4 bis 100 ° C, und
- Einleiten eines sauerstoffhaltigen Gases oder Gasgemischs in das Lagergut (16)

10. Verfahren nach Anspruch 9, **dadurch gekennzeichnet, dass** das sauerstoffhaltige Gas oder Gasgemisch im Bereich des Tankbodens (32) in das Lagergut (16) eingeleitet wird, wobei die Gasbläschen des sauerstoffhaltigen Gases oder Gasgemisches eine im Wesentlichen einheitliche Oberfläche aufweisen.

## Claims

1. Apparatus for aromatizing liquid stored goods (16), such as wines, spirits or the like alcoholic drinks, comprising an attachment device (10, 11, 12) on which a plurality of wooden panels (20) or wood-like panels are arranged, **characterized in that** the attachment device (10, 11, 12) has a guide element (10) having an approximately vertical longitudinal axis (A), the wooden panels (20) in their starting position being arranged essentially parallel to the longitudinal axis (A) so as to be able to pivot in such a manner that, on introduction into the stored goods (16), they spontaneously orientate as a function of their density and form an angle (α) to the longitudinal axis (A).

2. Apparatus according to Claim 1, **characterized in that** the attachment device (10, 11, 12) for attaching the wooden panels (20) has at least one support element (11, 12) which can be fastened to the guide element (10), the support elements (11, 12) being arranged along the guide element (10) spaced from one another by means of spacer elements (13).

3. Apparatus according to Claim 1 or 2, **characterized in that** the support elements (11, 12) comprise as essentially flat, in particular disc-shaped, panels (11) or rods (12a), bars, wires (12c) or the like frame devices or a combination thereof.

4. Apparatus according to one of Claims 1 to 3, **characterized in that** it is constructed or dimensioned in such a manner that it can be introduced into a tank (30) via a tank opening (31).

5. Apparatus according to Claim 4, **characterized in that** the diameter of the support elements (11, 12) is smaller than the diameter of the tank opening (31), and **in that** the diameter of the support elements (11, 12) varies along the longitudinal axis (A) of the guide element (10) in such a manner that the upper support elements (11, 12) assigned to the tank opening (31) have a larger diameter than the lower support elements (11, 12) assigned to a tank bottom (32).

6. Apparatus according to Claim 4 to 5, **characterized in that** the guide element (10) comprises, at its first end assigned to the tank opening (31), attachment means (14) for attachment to the tank (30) and has, at its second end assigned to the tank bottom (32), a weight (15) for stable positioning.

7. Apparatus according to one of Claims 1 to 6, **characterized in that** the wooden panels (20) are constructed in essentially rectangular shape, the wooden panels (20) having a thickness of about 1 to 15 mm, preferably about 3 to 7 mm, and **in that** the wooden panels (20) are fabricated from oak wood or from a wood or wood-like material having wood constituents corresponding to oak wood.

8. Apparatus according to one of Claims 1 to 7, **characterized in that** the support elements (11, 12) and the spacer elements are fabricated from wood, plastic or metal, preferably stainless steel.

9. Process for aromatizing liquid stored goods (16), such as wines or the like alcoholic drinks, by means of the apparatus according to one of Claims 1 to 8, **characterized by** the following steps:
- introducing the apparatus into the liquid stored goods (16),
- setting the temperature of the stored goods (16) in a range of about 4 to 100°C, and
- introducing an oxygen-containing gas or gas mixture into the stored goods (16).

10. Process according to Claim 9, **characterized in that** the oxygen-containing gas or gas mixture is introduced into the stored goods (16) in the region of the tank bottom (32), the gas bubbles of the oxygen-containing gas or gas mixture having an essentially uniform surface area.

## Revendications

1. Dispositif pour aromatiser des produits liquides à conserver (16), par exemple du vin, des spiritueux ou des boissons alcoolisées similaires, qui comprend un dispositif de fixation (10, 11, 12) sur lequel sont agencées plusieurs plaques en bois (20) ou plusieurs plaques ligneuses, **caractérisé en ce que** le dispositif de fixation (10, 11, 12) présente un élément de guidage (10) dont l'axe longitudinal (A) est sensiblement vertical, les plaques de bois (20) étant, dans leur position de départ, agencées essentiellement parallèlement à l'axe longitudinal (A) de manière à pouvoir pivoter de telle façon que, lorsqu'elles sont introduites dans le produit (16), elles s'orientent d'elles-mêmes en fonction de leur densité et forment un angle (α) par rapport à l'axe longitudinal (A).

2. Dispositif selon la revendication 1, **caractérisé en ce que** le dispositif de fixation (10, 11, 12) présente au moins un élément porteur (11, 12) qui peut être monté sur l'élément de guidage (10) pour fixer les plaques de bois (20), les éléments porteurs (11, 12) étant agencés le long de l'élément de guidage (10) et étant maintenus à distance les uns des autres par des éléments d'écartement (13).

3. Dispositif selon les revendications 1 ou 2, **caractérisé en ce que** les éléments porteurs (11, 12), qui sont essentiellement plans, sont en particulier des plaques (11) en forme de disque, des barres (12a), des tiges, des fils (12c) ou des dispositifs similaires de cadre ou une combinaison de ceux-ci.

4. Dispositif selon l'une des revendications 1 à 3, **caractérisé en ce qu'**il est configuré et dimensionné de manière à pouvoir être placé dans une citerne (30) par l'intermédiaire d'une ouverture (31) de la citerne.

5. Dispositif selon la revendication 4, **caractérisé en ce que** le diamètre des éléments porteurs (11, 12) est plus petit que le diamètre de l'ouverture (31) de la citerne et **en ce que** le diamètre des éléments porteurs (11, 12) varie le long de l'axe longitudinal (A) de l'élément de guidage (10) de telle façon que les éléments porteurs supérieurs (11, 12) qui se trouvent du côté de l'ouverture (31) de la citerne ont un diamètre plus grand que celui des éléments porteurs inférieurs (11, 12) qui se trouvent du côté du fond (32) de la citerne.

6. Dispositif selon les revendications 4 ou 5, **caractérisé en ce que** sur sa première extrémité située du côté de l'ouverture (31) de la citerne, l'élément de guidage (10) présente un moyen de fixation (14) en vue de sa fixation sur la citerne (30) et **en ce que** sur sa deuxième extrémité, orientée du côté du fond (32) de citerne, il présente un poids (15) qui assure la stabilité de sa position.

7. Dispositif selon l'une des revendications 1 à 6, **caractérisé en ce que** les plaques de bois (20) ont une configuration essentiellement rectangulaire, les plaques de bois (20) ayant une épaisseur comprise entre environ 1 et 15 mm et de préférence entre environ 3 et 7 mm et **en ce que** les plaques de bois (20) sont fabriquées en bois de chêne ou en un bois ou un matériau ligneux qui contient des substances ligneuses qui correspondent à celles du bois de chêne.

8. Dispositif selon l'une des revendications 1 à 7, **caractérisé en ce que** les éléments porteurs (11, 12) et les éléments d'écartement sont fabriqués en bois, en matière synthétique ou en métal et de préférence en acier allié.

9. Procédé d'aromatisation de produits liquides à conserver (16), par exemple du vin ou des boissons alcoolisées similaires, au moyen du dispositif selon l'une des revendications 1 à 8, **caractérisé par** les étapes qui consistent à :
- placer le dispositif dans le produit liquide à conserver (16),
- régler la température du produit à conserver (16) dans une plage comprise entre environ 4 et 100°C et
- introduire dans le produit à conserver (16) un gaz qui contient de l'oxygène ou un mélange gazeux qui contient de l'oxygène.

10. Procédé selon la revendication 9, **caractérisé en ce que** le gaz qui contient de l'oxygène ou le mélange gazeux qui contient de l'oxygène sont introduits dans le produit à conserver (16) dans la région du fond (32) de la citerne de telle sorte que les bulles du gaz qui contient de l'oxygène ou du mélange gazeux qui contient de l'oxygène aient essentiellement la même superficie.
